# EUROPEAN PATENT APPLICATION

(11) **EP 4 321 639 A1**
(43) Date of publication of application: **14.02.2024**
(21) Application number: 22868888.3
(22) Date of filing: 09.08.2022
(51) Int. Cl.: C22B 26/12, C22B 3/24

(54) **LITHIUM EXTRACTION METHOD FOR ALKALINE SOLUTION**

(30) Priority: 14.09.2021 CN 202111076775
(71) Applicant: Sunresin New Materials Co. Ltd., Xi'an, Shaanxi 710075 (CN)
(72) Inventor: LI, Suidang, Shaanxi 710075 (CN); KOU, Xiaokang, Shaanxi 710075 (CN); GUO, Fumin, Shaanxi 710075 (CN); YU, Jia, Shaanxi 710075 (CN); GAO, Wenjin, Shaanxi 710075 (CN); FAN, Lili, Shaanxi 710075 (CN); CHU, Kaile, Shaanxi 710075 (CN); BIAN, Weina, Shaanxi 710075 (CN); WANG, Yao, Shaanxi 710075 (CN); XIANG, Peng, Shaanxi 710075 (CN); LIU, Qiong, Shaanxi 710075 (CN)
(74) Representative: J A Kemp LLP
(86) International application number: PCT/CN2022/111010
(87) International publication number: WO 2023/040511

(57) **Abstract**

The present application discloses a lithium extraction method for an alkaline solution, in which a lithium adsorption material is used in an alkaline environment. Lithium ions in the alkaline solution are adsorbed, the lithium adsorption material is replaced with an alkaline high-lithium low-impurity solution, and then an acid solution is used for desorption, so that a high-lithium salt solution having higher lithium content can be obtained. Lithium concentration can reach 5 g/L or more, and the high-lithium salt solution can enter a bipolar membrane system for electrolysis, thereby preparing an alkaline high-lithium low-impurity solution and an acid solution for replacement and desorption of the lithium adsorption material. In the method provided by the present application, lithium in an alkaline solution is adsorbed by resin, and the lithium is preliminarily separated from sodium and potassium. Then, the sodium and the potassium are gradually removed from the resin according to the difference of the retention characteristics of the lithium, the sodium and the potassium on the resin, so that the function of lithium purification is achieved, and lithium concentration is ensured.

## Description

### CROSS REFERENCE TO RELATED APPLICATIONS

The present application claims priority to Chinese Patent Application No. 202111076775.3, entitled "LITHIUM EXTRACTION METHOD FOR ALKALINE SOLUTION", and filed to the China National Intellectual Property Administration on September 14, 2021, the entire contents of which are incorporated herein by reference.

### TECHNICAL FIELD

The present application relates to the technical field of extraction and recycling of lithium resources, belongs to the field of hydrometallurgy, and specifically relates to a technique for extracting lithium from an alkaline solution.

### BACKGROUND

In recent years, with the development of the new energy industry and lithium battery technologies, the demand for lithium is increasing day by day. As a material for producing secondary lithium salts and metallic lithium products, lithium carbonate is becoming increasingly important in new energy materials, and has become the most widely used lithium product in the lithium industry.

At present, one of key processes for preparing lithium carbonate from salar lake brine and ores is to precipitate the lithium chloride solution with sodium carbonate to prepare lithium carbonate, so as to obtain a lithium carbonate product and a precipitated lithium carbonation mother liquor solution. The lithium-precipitated mother liquor solution contains about 2 g/L to 3 g/L of lithium and about 50 g/L of sodium. In the existing process, lithium in the lithium-precipitated mother liquor solution is mainly recycled by using a neutralization-evaporation-crystallization method. That is, sulfuric acid is used to neutralize residual carbonate ions in the lithium-precipitated mother liquor solution to completely transform the solution into a mixed solution of sodium sulfate and lithium sulfate; then, the mixed solution is evaporated, concentrated, cooled and crystallized to precipitate a sodium sulfate solid; filtration is performed to obtain a lithium (lithium sulfate)-rich filtrate; and sodium carbonate is added for secondary lithium precipitation. The evaporation-crystallization method for treating the lithium-precipitated mother liquor solution has the disadvantages of high energy consumption, high acid consumption, high cost, and low lithium recovery rate. In addition, there are still a large number of carbonate salar lakes in northern Tibet, East Africa, eastern Mongolia in Asia, and California in the United States. In the prior art, carbonate salar lake brine is mainly concentrated by using a natural evaporation-crystallization method. However, due to the coexistence of carbonate ions, lithium salts are crystallized in stages during evaporation and concentration of the brine, and are dispersedly precipitated with a low grade, which is unbeneficial to extraction and processing of lithium salts. Meanwhile, the concentration degree of lithium-rich brine is limited, which makes it difficult to achieve a large-scale production capacity, and it is difficult to enrich lithium from the carbonate salar lake brine, which has become a key technical problem to be solved urgently.

In addition, in the fields of battery recycling and chemical catalysis, hydroxide solutions containing sodium may also be produced due to technological needs; lithium in the solutions mostly exist in the form of lithium hydroxide, and the solutions are strongly alkaline; industrially, a general way is to obtain a lithium hydroxide product by concentration and purification in a fractional crystallization way based on a difference in solubility between lithium hydroxide and sodium hydroxide in water, and this process also causes high energy consumption for evaporation and concentration.

### SUMMARY

To solve the problems of high energy consumption, low recovery rate and difficult industrialization in the prior art, the present application mainly adopts a method for extracting lithium from an alkaline solution, by which lithium ions are captured on the lithium adsorbent in an alkaline environment by special weak acidic functional groups on a lithium adsorbent, and an acid solution flows through the lithium adsorbent to desorb the captured lithium on the lithium adsorbent. During desorption, because of the special functional groups on the lithium adsorbent, hydrogen ions provided by the acid solution will desorb lithium ions when making contact with the lithium adsorbent for adsorbing the lithium ions; the hydrogen ions occupy the original positions of the lithium ions, but the desorbed lithium ions will be retained by the lithium adsorbent of which an inner layer has adsorbed lithium and will not flow out of a resin layer, thus forming a state that lithium is adsorbed in a plurality of layers; and other impurities such as sodium and potassium will be continuously pushed out by lithium, and transferred out towards an outer layer, so as to achieve the purpose of removing the impurities. By continuous push of the hydrogen ions, the lithium adsorbed by the lithium adsorbent is occupied by hydrogen, and the lithium adsorbed in the plurality of layers will be continuously transferred out towards the outer layer; due to the retaining function of the special weak acidic functional groups on the lithium adsorbent, the lithium concentration is continuously accumulated in the resin layer; after the hydrogen ions are replaced, the lithium ions flow out of the lithium adsorbent, and the lithium concentration is also greatly increased to achieve the purpose of concentration.

In order to achieve the purpose of the present application, the present application adopts the following technical solution:
The used resin is resin with weak acidic functional groups, and may be resin provided by a patent CN108421539A, and the resin is an organic macroporous crosslinked polymer grafted with a special functional group, and has a stable structure. Some resins including the following structures: 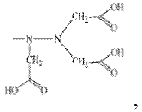 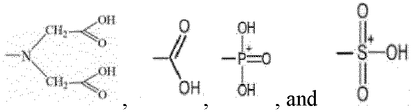 are used by this patent. Weak acidic resin having a separation degree for lithium and sodium, such as weak acidic phenolic resin, weak acidic cation exchange resin with a carboxyl group, weak acidic cation exchange resin with a carbonyl group, resin with a phosphorus-oxygen double bond, and resin with a sulfur-oxygen double bond, can also be used, and can selectively adsorb lithium ions in an alkaline environment, thus achieving the separation of lithium and sodium.

Optionally, the resin also comprises another type of inorganic material with a functional group having a spinel structure of LiₓM_{y}O_{z}, where M represents a metal. The matrix of the lithium adsorbent is styrene-based matrix; the lithium adsorbent is prepared according to the following method:
A. using divinylbenzene as crosslinking agent to copolymerize with styrene to obtain a polymer, or using tripropenyl isocyanurate and/or diethylene glycol divinylether as crosslinking agent to copolymerize with styrene to obtain a polymer;
B. the polymer obtained in A undergoes chloromethylation reaction to obtain chloromethylated base spheres, followed by amination; or the polymer undergoes ammonia methylation directly;
C. the product obtained in B undergoes carboxylation, phosphorylation, or sulfonation, and the exchanged group is introduced into the product to obtain the lithium adsorbent.

Optionally, the resin also comprises another type of inorganic material with a functional group having a spinel structure of LiₓM_{y}O_{z}, where M represents a metal; the matrix of the material is silica gel particles, and the material is obtained by modification and grafting coupling. The material is prepared according to the following method: the coupling agent aminopropyl trimethoxysilane, aminopropyl triethoxysilane, chloropropyl trimethoxysilane, or chloropropyl triethoxysilane is used to modify the hydroxyl group on the surface of the silica gel, and the active group at the other end of the coupling agent will further react, graft, and cure the functional group on its surface.

Optionally, the inorganic material with spinel structure LiₓM_{y}O_{z} has a precursor in the form of powder, which is granulated before use.

Optionally, wherein M represents manganese, titanium, zirconium, cobalt, or aluminum.

Optionally, wherein the x has a range from 1 to 3, y has a range from 1 to 3, and z has a range from 1 to 4.

Lithium adsorbent may also be an adsorbent provided by a patent CN102631897B, especially a lithium adsorbent prepared from an ionic sieve type lithium adsorbent precursor, specifically an ionic sieve type lithium adsorbent prepared by calcining titanium dioxide, manganese dioxide, titanium hydroxide, manganese hydroxide, manganese nitrate, titanium nitrate or other inorganic or organic compound materials containing manganese and titanium, and a lithium compound to prepare a precursor, and then using a method provided by the patent CN102631897B or an ionic sieve type lithium adsorbent of a same type purchased from the market. Optionally, this can be achieved through the following preferred methods:

### (1) Preparation of precursor.

The compounds used to prepare the lithium adsorbent precursor of the present invention can be selected from one or more of aluminum oxide, iron oxide, manganese oxide, titanium dioxide, aluminum hydroxide, iron hydroxide, manganese hydroxide, titanium hydroxide, aluminum nitrate, iron nitrate, manganese nitrate, titanium nitrate, aluminum carbonate, iron carbonate, manganese carbonate or other inorganic compounds or organic compounds containing aluminum, iron, manganese, and/or titanium. These compounds can be obtained by direct purchase of commercially available goods, or through acid-base neutralization, such as, the reaction of acid salts (aluminum sulfate, ferric chloride, manganese sulfate and others) with alkaline substances (such as sodium hydroxide, ammonia, sodium carbonate, lithium hydroxide, etc.) to prepare metal hydroxide precipitates, such that the molecular sieve type lithium adsorbent precursor can be obtained. Or the ionic sieve type precursor is prepared by calcining acid metal salt, metal oxide or hydroxide with lithium compound at high temperature.

In the present application, the molar ratio of lithium to other metals is generally 1:1 to 5:1 when preparing the ion sieve type lithium adsorbent precursor; preferably, the molar ratio of lithium to other metals is 1:1 to 2:1. The preparation method of the molecular sieve type lithium adsorbent precursor is to first prepare the metal oxygen-containing compounds into spherical bead particles, and then use the activation process to make it have the function of absorbing lithium ions. The mole ratio of lithium to other metals in the activated lithium adsorbent is generally between 1:1 and 5:1.

Lithium adsorbent precursor is a stable structural combination formed by metal oxygen-containing compounds with lithium ions or lithium halides or other lithium compounds, and lithium ions can be desorbed from the precursor into the solution, and can also be adsorbed from the solution onto the precursor. The condition for lithium ions to be desorbed from the precursor into the solution is that the precursor has already adsorbed lithium and the solution contains low concentration of lithium ions. The condition for lithium ions to be adsorbed from the solution onto the precursor is that the solution contains lithium ions and the precursor is in a state of lithium desorption. (2) Preparation of dispersed phase.

Lithium adsorbent precursors can be mixed with oil-soluble or water-soluble adhesives to prepare a dispersed phase, and the amount of adhesive added accounts for 10% to 80% of the total weight of the dispersed phase, and preferably 20% to 60%. When the adhesive is a polymerizable monomer, initiators, pore forming agents and thickening agents should be added at the same time. The initiator accounts for 0.1% to 5% of the total weight of the monomer, and preferably 1% to 3%. Pore forming agent accounts for 10% to 200% of the total weight of monomer, preferably 50% to 100%. The thickening agent can help the lithium adsorbent precursor to disperse evenly in the dispersed phase, and the amount of thickening agent added generally accounts for 1% to 10% of the total weight of to the dispersed phase, and preferably 1% to 5%. When the adhesive is a high molecular weight polymer, the curing agent is required or the temperature is controlled to cure it, and the amount of curing agent added accounts for 0.001% to 2% of the weight of the adhesive. When the adhesive is a small molecular substance with two self-condensable functional groups or a combination of two small molecular substances with mutual condensable functional groups, it is also necessary to add a catalyst, and the amount of catalyst added accounts for 0.001% to 50% of the weight of the adhesive.

The adhesive in the present application can be polymers, such as, one or more of polyacrylamide, polyacrylic acid, polyacrylate, polyurethane, polyester, polyether, polystyrene, polyenol, phenolic resin, epoxy resin and inorganic adhesive, etc.. The adhesive in the present application can also be a polymerizable monomer containing double bond(s) or a mixture thereof, or a monomer with two self-condensable functional groups, or a combination of monomers with a condensable functional group.

Further, the polymerizable monomers containing double bond(s) in the present invention may be acrylic acid, methacrylic acid, acrylamide, N-isopropylacrylamide, N-vinylpyrrolidone, N,N-methylene bisacrylamide, acrylonitrile, methacrylonitrile, ethylacrylonitrile, methyl acrylate, methyl methacrylate, propyl acrylate, propyl methacrylate, butyl acrylate, butyl methacrylate, n-octyl acrylate, n-octyl methacrylate, 2-ethylhexyl acrylate, 2-ethylhexyl methacrylate, hydroxyethyl methacrylate, vinyl acetate ester, glycidyl methacrylate, allyl acrylate, allyl methacrylate, diallyl phthalate, ethylene glycol diacrylate, ethylene glycol dimethacrylate, 1,3-butanediol diacrylate, 1,3-butanediol dimethacrylate, diallyl itaconate, triallyl isocyanurate, triglyceride trimethacrylate, styrene, α-methyl styrene, chloro-styrene, chloromethylstyrene or divinylbenzene. The substances with two condensable functional groups in the present application are 4-hydroxybutyric acid, 5-hydroxyvalerate acid, 6-hydroxycaproic acid, 1-hydroxycyclopropane carboxylic acid or ω-hydroxy-carboxylic acid, etc. The combination of monomers with condensable functional groups of the present application are phenol and formaldehyde, and/or 2,4-disulfonyl benzaldehyde; resorcinol and formaldehyde; 3,5-dihydroxybenzoic acid and formaldehyde; aromatic amine and formaldehyde; polyamine and epichlorohydrin; or toluene diisocyanate and polyether polyol, etc. The initiators, pore forming agents, thickening agents, etc. are substances commonly used by those skilled in the art in preparing resin particles. (3) Preparation of continuous phase.

The system incompatible with the dispersed phase is selected as the continuous phase. According to the nature of the continuous phase, the dispersant is added. If the continuous phase is an aqueous solution, the dispersant can be selected as water-soluble substances such as hydroxyethyl cellulose, gelatin, polyvinyl alcohol and carboxymethyl cellulose, etc. If the continuous phase is an oil solution, the dispersant can be selected from one or more of span-based dispersant and tween-based dispersant. The volume of the continuous phase is 1 to 10 times of the volume of the dispersed phase, and preferably 2 to 5 times. The added weight of the dispersant accounted for 0.01% to 10% of the total weight of the continuous phase. (4) Preparation and curing of lithium adsorbent resin.

The dispersed phase in step (2) is added to the continuous phase prepared in step (3), and the stirring rate is adjusted so that the dispersed phase is "suspended" in the continuous phase to disperse into beads of appropriate particle size. After the suspension is stable, the stirring rate is fixed and unchanged, and the beads were cured into spherical particles by adjusting the temperature or adding curing agent or catalyst. The particle size is preferably in a range from 0.3 mm to 2.0 mm. (5) Washing and treatment.

The cured spherical particles are filtered, and the dispersants and pore forming agents in the spherical particles are washed with suitable solvents, such as acetone, ethanol, toluene or gasoline. The resin containing lithium adsorbent LiCl•mM(OH)₃•nH₂O matrix was obtained by putting the washed spherical particles containing metal hydroxide into lithium halide solution with pH of 1.5 to 10 (preferably in lithium halide solution with pH of 2 to 8) and activated at 60°C to 120°C, and reacted at 80°C to 110°C for 2 to 8 hours. Or the resin of ion sieve type precursor containing manganese dioxide, iron oxide, titanium oxide, etc. was column treated with the solution of pH 0 to 5, and then washed to neutral to obtain the ion sieve type lithium adsorbent resin.

Optionally, lithium adsorbent resins are prepared by:
①Preparation of precursor: preparation of precursor of lithium adsorbent resin - molecular sieve type or ion sieve type lithium adsorbent precursor;
The preparation method of the molecular sieve type lithium adsorbent precursor includes: firstly the metal oxygen-containing compounds are prepared into spherical bead particles, and then the activation process is used to make the spherical bead particles have the function of absorbing lithium ions. The mole ratio of lithium and other metals in the activated lithium adsorbent is between 1:1 and 5:1.
②Preparation of dispersed phase: the precursors prepared above are uniformly mixed with adhesives and pore forming agents to prepare dispersed phase. The amount of the adhesive added accounts for 10% to 80% of the total weight of dispersed phase. The amount of the pore forming agent accounts for 10% to 200% of the total weight of monomer.

When the adhesive is a polymerizable monomer, the initiator, thickening agent and pore forming agent are added at the same time, and the amount of the initiator added accounts for 0.1% to 5% of the total weight of the monomer, the amount of the thickening agent accounts for 1% to 10% of the total weight of the dispersed phase, and the pore forming agent accounts for 10% to 200% of the total weight of monomer.

When the adhesive is a high molecular weight polymer, the curing agent is required or the temperature is controlled to cure it, and the amount of curing agent accounts for 0.001% to 2% of the weight of the adhesive. When the adhesive is a small molecule substance with two self-condensable functional groups or a combination of two small molecule substances with mutual condensable functional groups, it is also necessary to add a catalyst, and the amount of catalyst added accounts for 0.001% to 50% of the weight of the adhesive;
③Preparation of continuous phase: preparation of a continuous phase incompatible with the dispersed phase; The volume of the continuous phase is 1 to 10 times that of the dispersed phase, and the amount of the dispersant is 0.01 to 10% of the total weight of the continuous phase.
④ Preparation and curing of lithium adsorbent resin:
   The dispersed phase in step (2) is added to the continuous phase prepared in step (3), and the stirring rate is adjusted so that the dispersed phase is "suspended" in the continuous phase to disperse into beads of appropriate particle size. After the suspension is stable, the stirring rate is fixed and unchanged, and the beads are cured into spherical particles by adjusting the temperature or adding curing agent or catalyst. The particle size of the particles is in a range from 0.3 mm to 2.0 mm.
⑤ Washing and treatment:
   The cured spherical particles are filtered, and the dispersants and pore forming agents in the spherical particles are washed with solvents, such as acetone, ethanol, toluene or gasoline. The resin containing lithium adsorbent LiCl•mM(OH)₃•nH₂O matrix was obtained by putting the washed spherical particles containing metal hydroxide into lithium halide solution with pH of 1.5 to 10 and activated at 60°C to 120°C. Or the resin of ion sieve type precursor containing manganese dioxide, iron oxide, titanium oxide was column treated with the solution of pH 0 to 5, and then washed to neutral to obtain ion sieve type lithium adsorbent resin.

More specifically, the method for extracting lithium from the alkaline solution includes the following steps: 1. adsorption: loading a lithium adsorbent (resin or a lithium adsorbent) into resin exchange columns, and allowing an alkaline solution containing lithium ions to flow through the resin columns at a certain flow rate for adsorption; 2. replacement: after adsorption saturation of the resin or the lithium adsorbent, performing replacement by using an alkaline high-lithium low-impurity solution; pushing out impurities, excluding the lithium ions, such as sodium ions and potassium ions adsorbed by the lithium adsorbent by using the alkaline high-lithium low-impurity solution to obtain a sodium hydroxide and potassium hydroxide solution which can be returned to raw materials for removing divalent ions such as calcium and magnesium ions so as to reduce the influence of the divalent ions on lithium adsorption of the lithium adsorbent, where the alkaline high-lithium low-impurity solution means that the concentration of lithium ions in the solution is higher than that of other ions, and the concentration of lithium ions is not limited; alkaline high-lithium low-impurity merely means that the solution must be alkaline, and the concentration of the lithium ions is higher than that of other ions, and the concentration of the lithium ions may be 0.1 g/L or 20 g/L; the solution may also be a saturated lithium salt solution but the concentration of impurities should not be higher than the concentration of the lithium ions; 3. desorption: performing desorption on the lithium adsorbent by using an acid solution with a certain concentration; controlling the amount of acid provided; simultaneously collecting desorption solutions in stages; allowing a solution flowing out from a previous stage to enter a previous step; collecting a high-concentration lithium solution from the desorption solution in a middle stage so as to achieve the purpose of concentration, where the content of lithium ions can reach 10 g/L, even 15 g/L or above; and when the acid concentration is greater than 3 mol/L, the lithium concentration in the obtained desorption solution can reach 25 g/L or above; and then washing the resin with water to remove the acid left on the resin; and 4. after the desorption is completed, entering a first step of a next cycle for re-adsorption.

In order to better achieve lithium extraction from an alkaline solution, in combination with a continuous ion exchange device, the inventor achieve lithium concentration more easily. Meanwhile, in order to lower the cost, the alkaline high-lithium low-impurity solution used by the inventor and the acid solution used for desorption are both prepared by using a bipolar membrane device, which avoids purchase of raw materials. Raw materials for a bipolar membrane are from part of the high-concentration lithium solution obtained after acid desorption of the continuous ion exchange device, with main components being lithium salt and a small quantity of monovalent salts of sodium, potassium etc. The bipolar membrane has the characteristic that corresponding acid and alkali are obtained according to types of cations and anions in input salt. In the present disclosure, the raw materials for the bipolar membrane are determined by the raw materials-the alkaline solution entering an adsorption system; if the alkaline solution entering the adsorption system contains a large amount of chloride ions, hydrochloric acid is generally used to subject the lithium adsorbent to desorption; and if the raw materials entering the adsorption system contain a large amount of sulfate ions, sulfuric acid is generally used to subject the lithium adsorbent to desorption to obtain corresponding lithium chloride and lithium sulfate. The acid solutions obtained by electrolysis of the bipolar membrane are hydrochloric acid and sulfuric acid, respectively; and the alkalis are the same.

In conclusion, a main process of the present application adopts the continuous ion exchange device plus the bipolar membrane device, where the continuous ion exchange device can achieve adsorption, separation and concentration of lithium to concentrate to a lithium concentration of 15 g/L or above; and the bipolar membrane is mainly used for providing raw materials, an acid and an alkaline solution with a high lithium/sodium ratio used by the continuous ion exchange device. Compared with a process for extracting lithium from a salar lake in which the lithium ion concentration can be increased to about 20 g/L after processes of lithium adsorption of an adsorption apparatus in a previous stage, magnesium removal from a qualified desorption solution by a nanofiltration membrane, reverse osmosis concentration, electrodialysis concentration and MVR concentration, this process only requires a two-stage process to realize the concentration of a lithium-containing solution, and has relatively low energy consumption and cost, which has obvious advantages.

To better understand the present application, the continuous ion exchange device mentioned in the present application is specifically assembled as follows: 1. the continuous ion exchange device is divided into four zones; each zone at least includes one resin column; the resin columns are sequentially connected by pipelines in series or in parallel, thus forming an adsorption zone, a replacement zone, a desorption zone and a water-washing acid zone which sequentially move and cyclically operate; 2. the adsorption zone: a plurality of groups of resin columns are connected in parallel for operation; each group of the resin columns can have different numbers of resin columns connected in series, where the number of the resin columns connected in parallel like 1, 2, 3, 4......, and the number of the resin columns connected in series like 1, 2, 3, 4......; an alkaline lithium-containing solution flows through the resin columns in the adsorption zone at a certain flow rate, so that lithium ions are adsorbed on the resin, an adsorption tail liquid is discharged to a salar, and materials can be fed into the adsorption zone in a positive flow or a reverse flow; 3. the replacement zone: a plurality of groups of resin columns are connected in parallel for operation; each group of the resin columns can have different numbers of resin columns connected in series, where the number of the resin columns connected in parallel like 1, 2, 3, 4......, and the number of the resin columns connected in series like 1, 2, 3, 4......; an alkaline solution with a high lithium/sodium ratio flows through the resin columns in the replacement zone at a certain flow rate, so that mother liquor solutions in the resin columns are pushed out to an alkaline brine pond, and materials can be fed into the replacement zone in a positive flow or a reverse flow; 4. the desorption zone: a plurality of groups of resin columns are connected in parallel for operation; each group of the resin columns can have different numbers of resin columns connected in series, where the number of the resin columns connected in parallel like 1, 2, 3, 4......; the number of the resin columns connected in series like 1, 2, 3, 4......; an acid solution with a certain concentration is used to subject the resin to desorption; the amount of acid provided is controlled; meanwhile, desorption solutions are collected in stages; a solution flowing out from a previous stage is fed to a feeding tank in the replacement zone; a high-concentration lithium solution is collected from the desorption solution in a later stage, and materials can be fed into the desorption zone in a positive flow or a reverse flow; 5. the water-washing acid zone: a plurality of groups of resin columns are connected in parallel for operation; each group of the resin columns can have different numbers of resin columns connected in series, where the number of the resin columns connected in parallel like 1, 2, 3, 4......; the number of the resin columns connected in series like 1, 2, 3, 4......; pure water is used to wash the acid in the resin columns; the acid after washing is recycled in an acid distribution tank in the desorption zone, and materials can be fed into the water-washing acid zone in a positive flow or a negative flow; and 6. devices that implement the above continuous ion exchange include, but are not limited to, a valve array type SMB(simulated moving bed) device, a rotating disc type SMB device, a multi-way valve type SMB device, etc.

The method of the present application has the main advantages that lithium in the alkaline solution can be adsorbed by the resin; preliminary separation of lithium, sodium and potassium can be realized; and the sodium and potassium can be gradually removed from the resin according to the difference of retention characteristics of the lithium, sodium and potassium on the resin, thus achieving the function of purifying lithium as well as providing a guarantee for lithium concentration.

### DETAILED DESCRIPTION

The present application is further described below with reference to embodiments, and the description in the embodiments is not limited to the protection scope of the present application.

For a clearer description of the embodiments, resin and lithium adsorbents in the embodiments are numbered, where the corresponding relationships are as follows:
1# is a titanium-based lithium adsorbent, which is a lithium adsorbent prepared from raw materials including titanium dioxide, titanium hydroxide, titanium nitrate or other titanium salts; and a lithium adsorbent prepared in Embodiment 8 in the patent CN102631897B was specifically adopted in this embodiment;
2# is resin with a functional group 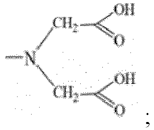 and a lithium adsorbent 11 prepared in Embodiment 11 in the patent CN108421539A was specifically adopted in this embodiment;
3# corresponds to resin with a functional group 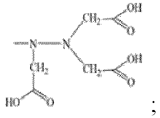 and a lithium adsorbent 9 prepared in Embodiment 9 in the patent CN108421539A was specifically adopted in this embodiment;
4# corresponds to resin with a functional group 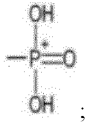 and a lithium adsorbent 4 prepared in Embodiment 4 in the patent CN108421539A was specifically adopted in this embodiment;
5# corresponds to resin with a functional group 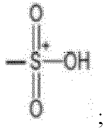 and a lithium adsorbent 5 prepared in Embodiment 5 in the patent CN108421539A was specifically adopted in this embodiment;
6# corresponds to resin with a functional group 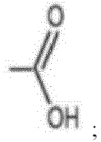 and a lithium adsorbent 3 prepared in Embodiment 3 in the patent CN108421539A was specifically adopted in this embodiment; and
7# is a manganese-based lithium adsorbent, which is a lithium adsorbent prepared from raw materials including manganese dioxide, manganese hydroxide, manganese nitrate or other manganese salts, and specifically corresponds to a lithium adsorbent prepared in Embodiment 12 in the patent CN102631897B.

### Embodiment 1

A lithium-precipitated mother liquor solution obtained in a lithium carbonate production process was filtered to obtain a filtrate containing main components lithium chloride, lithium carbonate, sodium carbonate and sodium chloride, where a content of lithium ions was 1.6 g/L; the content of sodium ions was 45 g/L; and the content of carbonate radicals was about 20 g/L. The following experiment was implemented: 1. 4 BV of the above feed liquid was quantificationally loaded onto resin columns which were loaded with 200 ml of 1#, 2#, 3#, 4#, 5#, 6# and 7# lithium adsorbents respectively at a flow rate of 3 BV/h to realize adsorption saturation; and the lithium adsorption quantity of each resin or lithium adsorbent was calculated; 2. 1 BV of a 1.8 mol/L lithium hydroxide solution (with 4 g/L of Na⁺ and 0.3 g/L of K⁺) was used to respectively replace the above adsorption-saturated resin or lithium adsorbents; and a corresponding amount of lithium consumed by each unit volume of lithium adsorbent in the lithium hydroxide solution was calculated; and 3. 3 BV of a 3 mol/L hydrochloric acid solution was used to regenerate the replaced resin, and a maximum lithium concentration in a regeneration solution was detected, as shown in the following table:

| Sequence No. | Lithium Adsorption Quantity (g/L) | Lithium Consumption (g/L) | Maximum lithium concentration in regeneration solution (g/L) |
|---|---|---|---|
| 1# | 2.057 | 12.12 | 10.81 |
| 2# | 2.652 | 7.42 | 25.67 |
| 3# | 3.135 | 2.52 | 27.40 |
| 4# | 2.875 | 4.44 | 23.21 |
| 5# | 1.642 | 3.23 | 9.75 |
| 6# | 1.528 | 9.86 | 12.99 |
| 7# | 2.241 | 7.47 | 17.07 |

It can be seen from the data that 2#, 3#, 4# and 7# resin achieved better lithium concentration.

### Embodiment 2

The following table shows brine indexes of a certain lake area in Tibet.

| Raw material | K⁺ | Na⁺ | Mg²⁺ | Ca²⁺ | Li+ | Cl⁻ | SO₄²⁻ | Density | pH |
|---|---|---|---|---|---|---|---|---|---|
| Content (g/L) | 3.6 | 30.3 | 4.15 | 0.75 | 0.62 | 59.3 | 15.54 | 1.07 | 8.2 |

The above brine of the certain lake area in Tibet was briefly filtered and subjected to the following experiment: 1. 4 BV of the above feed liquid was quantificationally loaded onto resin columns which were loaded with 200 ml of 1#, 2#, 3#, 4#, 5#, 6# and 7# lithium adsorbents respectively at a flow rate of 5 BV/h to realize resin adsorption saturation; and the lithium adsorption quantity of each resin was calculated; 2. 0.9 BV of a 2 mol/L lithium hydroxide solution (with 10 g/L of Na⁺ and 0.1 g/L of K⁺) was used to respectively replace the above adsorption-saturated resin or lithium adsorbents; and a corresponding amount of lithium consumed by each unit volume of lithium adsorbent in the lithium hydroxide solution was calculated; and 3. 4 BV of a 2.3 mol/L hydrochloric acid solution was used to regenerate the replaced resin, and a maximum lithium concentration in a regeneration solution was detected, as shown in the following table:

| Sequence No. | Lithium Adsorption Quantity (g/L) | Lithium Consumption (g/L) | Maximum lithium concentration in regeneration solution (g/L) |
|---|---|---|---|
| 1# | 1.97 | 13.53 | 8.42 |
| 2# | 1.82 | 8.28 | 15.73 |
| 3# | 1.02 | 4.72 | 16.32 |
| 4# | 1.25 | 6.13 | 13.6 |
| 5# | 0.93 | 6.24 | 8.31 |
| 6# | 0.62 | 11.47 | 9.74 |
| 7# | 1.92 | 8.21 | 12.31 |

The above table indicates that for alkaline salar lakes in Tibet and the like, a way of resin adsorption plus concentration can increase the lithium concentration, and the concentration of lithium ions can be increased by using an acid for desorption.

### Embodiment 3

A lithium-precipitated mother liquor solution obtained in a lithium carbonate production process was filtered to obtain a filtrate containing main components lithium chloride, lithium carbonate, sodium carbonate and sodium chloride, where the content of lithium ions was 1.6 g/L; the content of sodium ions was 45 g/L; and a pH was 11.5.

Technological parameters for operation were as follows:
an adsorption zone: each column was fed with 2 BV of the lithium-precipitated mother liquor solution at a flow rate of 4 BV/h;
a replacement zone: 2 BV of a 0.6 mol/L lithium hydroxide solution (with 1.5 g/L of Na⁺ and 1.6 g/L of K⁺) was fed at a flow rate of 4 BV/h, and the previous 1 BV was returned to a raw material zone;
a desorption zone: 1.5 BV of a 3 mol/L hydrochloric acid solution was fed at a flow rate of 3 BV/h; before an outlet, 1.2 BV was recycled in the replacement zone, and the subsequent 0.3 BV was fed to a qualified liquid tank;
a water-washing acid zone: 1.5 BV was fed, and a water-washing flow rate was 3 BV/h;
switching time: 0.5 h; and
resin used: 3# resin.

The above raw materials and processes were adopted to further verify different combination processes of continuous ion exchange to obtain the content of lithium ions in the desorption solution, as shown in the following table:

| Combination of resin columns in adsorption zone | Combination of resin columns in replacement zone | Combination of resin columns in desorption zone | Combination of resin columns in water-washing acid zone | Desorption solution concentration (g/L) |
|---|---|---|---|---|
| Eight groups are connected in parallel, and each group includes one column for operation | Three groups are connected in parallel, and each group includes three columns connected in series | Three groups are connected in parallel, and each group includes three columns connected in series | Three groups are connected in parallel, and each group includes one column for operation | 18.43 |
| Four groups are connected in parallel, and each group includes two columns connected in series | Single group runs with six columns connected in series | Single group runs with ten columns connected in series | Single group runs with three columns connected in series | 17.61 |
| Two groups are connected in parallel, and each group includes three columns connected in series | Single group runs with five columns connected in series | Single group runs with four columns connected in series | Single group runs with four columns connected in series. | 15.22 |

| | | | | |
|---|---|---|---|---|
| Single group runs with one column connected in series | Single group runs with one column connected in series | Single group runs with one column connected in series | Single group runs with one column connected in series | 6.75 |
| Three groups are connected in parallel, and each group includes three columns connected in series | Two groups are connected in parallel, and each group includes three columns connected in series | Two groups are connected in parallel, and each group includes three columns connected in series | Two groups are connected in parallel, and each group includes two columns connected in series | 14.17 |
| Six groups are connected in parallel, and each group includes three columns connected in series | Three groups are connected in parallel, and each group includes four columns connected in series | Two groups are connected in parallel, and each group includes four columns connected in series | Four groups are connected in parallel, and each group includes four columns connected in series | 17.44 |

The lithium-precipitated mother liquor solution was used to test the combination of different resin columns in the adsorption zone, the replacement zone, the desorption zone and the water-washing acid zone in the continuous ion exchange process. Single group achieved a poor operation effect, and other combination manners all achieved qualified solutions with a high concentration of lithium ions; and compared with a process extracting lithium from a salar lake, a qualified solution with a high concentration can be obtained without membrane concentration or evaporation concentration.

### Embodiment 4

The following table shows brine indexes of a certain lake area in Tibet.

| Raw material | K⁺ | Na⁺ | Mg²⁺ | Ca²⁺ | Li⁺ | Cl⁻ | SO₄²⁻ | Density | pH |
|---|---|---|---|---|---|---|---|---|---|
| Content (g/L) | 3.6 | 30.3 | 4.15 | 0.75 | 0.62 | 59.3 | 15.54 | 1.07 | 8.2 |

Technological parameters for operation are as follows:
an adsorption zone: 4 BV of brine was fed at a flow rate of 8 BV/h;
a replacement zone: 2.2 BV of a 1 mol/L lithium hydroxide solution (with 2.5 g/L of Na⁺ and 3.6 g/L of K⁺) was fed at a flow rate of 4 BV/h, and the previous 1 BV was returned to a raw material zone;
a desorption zone: 1.5 BV of a 3.5 mol/L hydrochloric acid solution was fed at a flow rate of 3 BV/h; before an outlet, 1.2 BV was recycled in the replacement zone, and the subsequent 0.3 BV was fed to a qualified liquid tank;
a water-washing acid zone: 1.5 BV was fed, and a water-washing flow rate was 3 BV/h;
switching time: 0.5 h; and
resin used: 2# resin.

The above raw materials and processes were adopted to further verify different combination processes of continuous ion exchange to obtain the content of lithium ions in the desorption solution, as shown in the following table:

| Combination of resin columns in adsorption zone | Combination of resin columns in replacement zone | Combination of resin columns in desorption zone | Combination of resin columns in water-washing acid zone | Desorption solution concentration (g/L) |
|---|---|---|---|---|
| Eight groups are connected in parallel, and each group includes one column for operation | Three groups are connected in parallel, and each group includes three columns connected in series | Three groups are connected in parallel, and each group includes three columns connected in series | Three groups are connected in parallel, and each group includes one column for operation | 19.36 |
| Four groups are connected in parallel, and each group includes two columns connected in series | Single group runs with six columns connected in series | Single group runs with ten columns connected in series | Single group runs with three columns connected in series | 24.78 |
| Two groups are connected in parallel, and each group includes three columns connected in series | Single group runs with five columns connected in series | Single group runs with four columns connected in series | Single group runs with four columns connected in series | 22.42 |
| Single group runs with one column connected in series | Single group runs with one column connected in series | Single group runs with one column connected in series | Single group runs with one column connected in series | 8.53 |
| Three groups are connected in parallel, and each group includes three columns connected in series | Two groups are connected in parallel, and each group includes three columns connected in series | Two groups are connected in parallel, and each group includes three columns connected in series | Two groups are connected in parallel, and each group includes two columns connected in series | 18.19 |
| Six groups are connected in parallel, and each group includes three columns connected in series | Three groups are connected in parallel, and each group includes four columns connected in series | Two groups are connected in parallel, and each group includes four columns connected in series | Four groups are connected in parallel, and each group includes four columns connected in series | 20.25 |

The 2# resin and the brine in the certain lake area in Tibet were used to test the combination of different resin columns in the adsorption zone, the replacement zone, the desorption zone and the water-washing acid zone in the continuous ion exchange process. All groups could achieve the purpose of increasing the concentration of lithium ions; meanwhile, the maximum concentration could reach 20 g/L or higher; and a lithium precipitation process could be directly implemented. Compared with a process extracting lithium from a Qinghai salar lake, the method provided in the present patent has the effects of reducing concentration step and reducing energy consumption.

### Embodiment 5

The following table shows indexes of a battery recycling solution of a certain company.

| Raw material | Ni²⁺ | Na⁺ | Co²⁺ | Li⁺ | SO₄²⁻ | Density | pH |
|---|---|---|---|---|---|---|---|
| Content (g/L) | 0.001 | 50.3 | 0.002 | 1.32 | 15.54 | 1.07 | 7.95 |

Technological parameters for operation are as follows:
an adsorption zone: 3 BV of a mother liquor solution was fed at a flow rate of 6 BV/h;
a replacement zone: 2 BV of a 0.7 mol/L lithium hydroxide solution (with 1.3 g/L of Na⁺ and 2.2 g/L of K⁺) was fed at a flow rate of 4 BV/h; a flow-out solution was returned to a raw material zone to regulate a pH of raw materials to about 10 for further removing divalent ions such as nickel and cobalt, thereby reducing the influence of nickel and cobalt on lithium adsorption;
a desorption zone: 2 BV of a 1 mol/L hydrochloric acid solution was fed at a flow rate of 4 BV/h; before an outlet, 1.5 BV was fed to a replacing liquid tank; and the subsequent 0.5 BV was fed to a qualified liquid tank; and
a water-washing acid zone: 1.5 BV was fed, and a water-washing flow rate was 3 BV/h;
a qualified solution was electrolyzed in a bipolar membrane to prepare 1 mol/L hydrochloric acid for recycling, and a 1.5 mol/L lithium hydroxide solution (with 2.04 g/L of Na⁺ and 0.1 g/L of K⁺) for recycling in the replacement zone;
switching time: 0.5 h; and
resin used: 4# resin.

The above raw materials and processes were adopted to further verify different combination processes of continuous ion exchange to obtain the content of lithium ions in the desorption solution, as shown in the following table:

| Combination of resin columns in adsorption zone | Combination of resin columns in replacement zone | Combination of resin columns in desorption zone | Resin columns in water-washing acid zone | Desorption solution concentration (g/L) |
|---|---|---|---|---|
| Eight groups are connected in parallel, and each group includes one column for operation | Three groups are connected in parallel, and each group includes three columns connected | Three groups are connected in parallel, and each group includes three columns | Three groups are connected in parallel, and each group includes one column for | 11.36 |

| | | | | |
|---|---|---|---|---|
| | in series | connected in series | operation | |
| Four groups are connected in parallel, and each group includes two columns connected in series | Single group runs with six columns connected in series | Single group runs with ten columns connected in series | Single group runs with three columns connected in series | 9.58 |
| Two groups are connected in parallel, and each group includes three columns connected in series | Single group runs with five columns connected in series | Single group runs with four columns connected in series | Single group runs with four columns connected in series | 10.15 |
| Single group runs with one column connected in series | Single group runs with one column connected in series | Single group runs with one column connected in series | Single group runs with one column connected in series | 8.58 |
| Three groups are connected in parallel, and each group includes three columns connected in series | Two groups are connected in parallel, and each group includes three columns connected in series | Two groups are connected in parallel, and each group includes three columns connected in series | Two groups are connected in parallel, and each group includes two columns connected in series | 9.01 |
| Six groups are connected in parallel, and each group includes three columns connected in series | Three groups are connected in parallel, and each group includes four columns connected in series | Two groups are connected in parallel, and each group includes four columns connected in series | Four groups are connected in parallel, and each group includes four columns connected in series | 10.03 |

A raffinate obtained after removing nickel and cobalt from the battery recycling solution of the certain company by extraction was used to test the combination of different resin columns in the adsorption zone, the replacement zone, the desorption zone and the water-washing acid zone in the continuous ion exchange process; besides, a qualified solution was fed to a bipolar membrane to prepare the used acid and alkaline lithium-containing solution; afterwards, the acid and the alkaline lithium-containing solution were recycled to the desorption zone and the replacement zone in the continuous ion exchange process; that is, externally introduced acid and alkali were not used; and the data results show that the concentration of the acid generated by using the bipolar membrane will not be too high. Therefore, due to the limitation of the concentration of the acid, the lithium desorption concentration will not be too high. However, there is an advantage that acid and alkali can both be self-produced and self-used without introducing foreign raw materials. In addition, the preparation of acid and alkali by using the bipolar membrane has a cost advantage, and is more applicable to areas where purchasing is inconvenient, such as a remote salar lake. Besides, if a concentrated acid was added to regulate the concentration of the acid to 2 mol/L, the lithium content in the qualified solution would reach 20 g/L, which directly achieved a concentration effect.

The above embodiments are further descriptions of the patent of the present application to provide a better understanding of the patent, and are not intended to limit the implementation of the patent of the present application.

## Claims

1. A method for extracting lithium from an alkaline solution, comprising: adsorbing lithium ions in the alkaline solution by using a lithium adsorbent in an alkaline environment ; then replacing the lithium adsorbent with an alkaline high-lithium low-impurity solution; and performing desorption by using an acid solution to obtain a high-lithium salt solution with a higher lithium content.

2. The method according to claim 1, wherein the high-lithium salt solution has a lithium concentration of 5 g/L or above.

3. The method according to claim 1, wherein the high-lithium salt solution can be electrolyzed in a bipolar membrane system to prepare the alkaline high-lithium low-impurity solution and the acid solution for the replacement and desorption of the lithium adsorbent.

4. The method according to claim 1, wherein the lithium adsorbent is resin provided by a patent CN108421539A.

5. The method according to claim 4, wherein the resin provided by the patent CN108421539A is an organic macromolecular crosslinked polymer grafted with a special functional group, and has a stable structure.

6. The method according to claim 5, wherein the resin provided by the patent CN108421539A is the resin comprising the following structures:

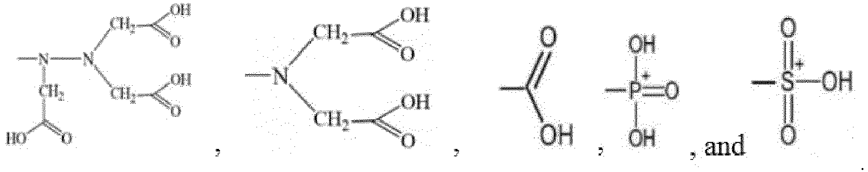

7. The method according to claim 5, wherein weak acidic resin having a separation degree for lithium and sodium, such as weak acidic phenolic resin, weak acidic cation exchange resin with a carboxyl group, weak acidic cation exchange resin with a carbonyl group, resin with a phosphorus-oxygen double bond, and resin with a sulfur-oxygen double bond, can be used, and can selectively adsorb lithium ions in an alkaline environment, thus achieving the separation of lithium and sodium.

8. The method according to claim 4, wherein the lithium adsorbent can also be an adsorbent provided by a patent CN102631897B, especially a lithium adsorbent prepared from an ionic sieve type lithium adsorbent precursor.

9. The method according to claim 8, wherein the lithium adsorbent is specifically an ionic sieve type lithium adsorbent prepared by calcining titanium dioxide, manganese dioxide, titanium hydroxide, manganese hydroxide, manganese nitrate, titanium nitrate or other inorganic or organic compound materials containing manganese and titanium, and a lithium compound to prepare a precursor, and then using a method provided by the patent CN102631897B or an ionic sieve type lithium adsorbent of a same type purchased from the market.

10. The method according to claim 1, wherein the alkaline solution refers to an alkaline lithium-containing solution with a pH of greater than 7.

11. The method according to claim 1, wherein the lithium concentration in a desorption solution can reach 5 g/L or above; the desorption solution has different lithium ion concentrations according to different concentrations of an acid used in desorption; when the acid concentration reaches 2-3 mol/L, the lithium concentration in the obtained desorption solution can reach 10 g/L or above, even 15 g/L or above; and when the acid concentration is greater than 3 mol/L, the lithium concentration in the obtained desorption solution can reach 25 g/L or above.

12. The method according to claim 1, wherein the alkaline solution refers to an alkaline lithium-containing solution with a pH of greater than 8.

13. The method according to claim 1, wherein the alkaline high-lithium low-impurity solution means that the solution has a pH of greater than 7, and meanwhile the concentration of lithium ions in the solution is higher than that of other ions.

14. The method according to claim 1, wherein a bipolar membrane is a device configured to provide an acid and an alkaline high-lithium low-impurity solution for a system.

15. The method according to claim 1, comprising the following steps:
(1) adsorption: loading a lithium adsorbent into resin exchange columns, and allowing an alkaline solution containing lithium ions to flow through the resin columns at a certain flow rate for adsorption;
(2) replacement: after adsorption saturation of resin or a lithium adsorbent, performing replacement by using an alkaline high-lithium low-impurity solution; and pushing out impurities, excluding the lithium ions, such as sodium ions and potassium ions adsorbed by the lithium adsorbent by using the alkaline high-lithium low-impurity solution to obtain a sodium hydroxide and potassium hydroxide solution which can be returned to raw materials for removing divalent ions such as calcium and magnesium ions so as to reduce the influence of the divalent ions on lithium adsorption of the lithium adsorbent, wherein the alkaline high-lithium low-impurity solution means that the concentration of lithium ions in the solution is higher than that of other ions, and the concentration of lithium ions is not limited; alkaline high-lithium low-impurity merely means that the solution must be alkaline, and the concentration of lithium ions is higher than that of other ions; the concentration of lithium ions can be 0.1 g/L or 20 g/L; and the solution can also be a saturated lithium salt solution but the concentration of impurities should not be higher than the concentration of lithium ions;
(3) desorption: performing desorption on the lithium adsorbent by using an acid solution with a certain concentration; controlling the amount of acid provided; simultaneously collecting desorption solutions in stages; allowing a solution flowing out from a previous stage to enter a previous step; collecting a high-concentration lithium solution from the desorption solution in a middle stage so as to achieve the purpose of concentration, wherein the content of lithium ions can reach 10 g/L, even 15 g/L or above; when the acid concentration is greater than 3 mol/L, the lithium concentration in the obtained desorption solution can reach 25 g/L or above; and then washing the resin with water to remove the acid left on the resin; and
(4) after the desorption is complete, entering a first step of a next cycle for re-adsorption.

16. The method according to claim 1, comprising the following step:
using a continuous ion exchange device plus a bipolar membrane device, wherein the continuous ion exchange device can achieve adsorption, separation and concentration of lithium to concentrate to a lithium concentration of 15 g/L or above.

17. A system for the method for extracting lithium from the alkaline solution of claim 1, wherein
(1) a continuous ion exchange device is divided into four zones; each zone at least comprises one resin column; and the resin columns are sequentially connected by pipelines in series or in parallel, thus forming an adsorption zone, a replacement zone, a desorption zone and a water-washing acid zone which sequentially move and cyclically operate;
(2) the adsorption zone: a plurality of groups of resin columns are connected in parallel for operation; each group of the resin columns can have different numbers of resin columns connected in series, wherein the number of the resin columns connected in parallel can be 1, 2, 3, 4......; the number of the resin columns connected in series can be 1, 2, 3, 4......; an alkaline lithium-containing solution flows through the resin columns in the adsorption zone at a certain flow rate, so that lithium ions are adsorbed on the resin, an adsorption tail liquid is discharged to a salt pan, and materials can be fed into the adsorption zone in a positive flow or a reverse flow;
(3) the replacement zone: a plurality of groups of resin columns are connected in parallel for operation; each group of the resin columns can have different numbers of resin columns connected in series, wherein the number of the resin columns connected in parallel can be 1, 2, 3, 4......; the number of the resin columns connected in series can be 1, 2, 3, 4......; an alkaline solution with a high lithium/sodium ratio flows through the resin columns in the replacement zone at a certain flow rate, so that mother liquor solutions in the resin columns are pushed out to an alkaline brine pond, and materials can be fed into the replacement zone in a positive flow or a reverse flow;
(4) the desorption zone: a plurality of groups of resin columns are connected in parallel for operation; each group of the resin columns can have different numbers of resin columns connected in series, wherein the number of the resin columns connected in parallel can be 1, 2, 3, 4......; the number of the resin columns connected in series can be 1, 2, 3, 4......; an acid solution with a certain concentration is used to subject the resin to desorption; the amount of acid provided is controlled; meanwhile, desorption solutions are collected in stages; a solution flowing out from a previous stage is fed to a feeding tank in the replacement zone; a high-concentration lithium solution is collected from the desorption solution in a later stage, and materials can be fed into the desorption zone in a positive flow or a reverse flow;
(5) the water-washing acid zone: a plurality of groups of resin columns are connected in parallel for operation; each group of the resin columns can have different numbers of resin columns connected in series, wherein the number of the resin columns connected in parallel can be 1, 2, 3, 4......; the number of the resin columns connected in series can be 1, 2, 3, 4......; pure water is used to wash the acid in the resin columns; the acid after washing is recycled in an acid distribution tank in the desorption zone, and materials can be fed into the water-washing acid zone in a positive flow or a reverse flow; and
(6) devices that implement the above continuous ion exchange comprise, but are not limited to, a valve array type device, a rotating disc type device, and a multi-way valve type device.
